# EUROPEAN PATENT SPECIFICATION

(11) **EP 3 163 407 B1**
(45) Date of publication and mention of the grant of the patent: **26.08.2020**
(21) Application number: 16192897.3
(22) Date of filing: 07.10.2016
(51) Int. Cl.: G06F 3/01

(54) **METHOD AND APPARATUS FOR ALERTING TO HEAD MOUNTED DISPLAY USER**
VERFAHREN UND VORRICHTUNG ZUM ALARMIEREN DES BENUTZERS EINER KOPFMONTIERTEN ANZEIGE
PROCÉDÉ ET APPAREIL PERMETTANT D'ALERTER UN UTILISATEUR DE VISIOCASQUE

(30) Priority: 29.10.2015 US 201514927309; 17.03.2016 KR 20160032288
(43) Date of publication of application: 03.05.2017
(73) Proprietor: Samsung Electronics Co., Ltd., Gyeonggi-do 16677 (KR)
(72) Inventor: ROCHFORD, Ciaran, Bellevue, WA 98004 (US); HARSCOET, Philippe, Bellevue, WA 98007 (US)
(74) Representative: HGF

(56) References cited:
- EP-A2- 2 660 643
- WO-A2-2013/052855
- US-A1- 2013 005 467
- US-A1- 2015 094 142

## Description

### TECHNICAL FIELD

The present application relates generally to display devices and, more specifically, to a head mounted display.

### BACKGROUND

A head mounted display (HMD) places one or more display screens in front of the eyes of a user, typically to present a pseudo-stereo view of a real or computer generated 3D scene. Except where the HMD is in the form of glasses or goggles through which the user can see "the real world," a HMD typically hinders the user's awareness of objects in his/her vicinity.

WO 2013/052855 A2 discloses methods and systems relating to detecting physical objects near a substantially transparent head-mounted display system and activating a collision-avoidance action to alert a user of the detected objects.

EP 2660643 A2 discloses a head-mountable display system.

US 2015/0094142 A1 discloses camera based safety mechanisms for users of head-mounted displays.

### SUMMARY

The invention is defined by the independent claims. Further aspects of the invention are outlined in the dependent claims. When the term "embodiment" is used for describing an unclaimed combination of features, it has to be understood as referring to examples useful for understanding the present invention.

Also disclosed is a method for displaying an alert to a user of a head mounted display (HMD). The HMD includes a controller, an internal display, and an external sensor. The method includes detecting one or more characteristics of an object in a vicinity of the user, using the external sensor, and determining whether a detected characteristic matches a predefined criterion. The method also includes displaying an alert to the user on the internal display if the characteristic matches the criterion.

Also disclosed is a HMD including a headpiece that removably couples the HMD to the body of a user of the HMD. The HMD also includes an external sensor and an internal display that is visible to the user. The HMD further includes a controller coupled to the external sensor and internal display. The controller detects one or more characteristics of an object in a vicinity of the user, using the external sensor, and determines whether a detected characteristic matches a predefined criterion. If a match is found, the controller displays an alert to the user on the internal display.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device maybe implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 illustrates a head mounted display according to the disclosure;
FIGURE 2 illustrates a system for use of a head mounted display according to the disclosure;
FIGURE 3 illustrates a controller for a head mounted display according to the disclosure;
FIGURE 4 illustrates a host system for a head mounted display according to the disclosure;
FIGURE 5 illustrates a trigger zone and an object in the vicinity of a head mounted display user according to the disclosure; and
FIGURE 6 illustrates a flow chart for displaying an alert for a real-world object to a head mounted display user according to the disclosure.

### DETAILED DESCRIPTION

The present disclosure adds an external sensor system to a head mounted display (HMD) to provide an alert to a user of the HMD of objects around the user that may physically interact with the user. When the user is immersed in a virtual reality (VR) experience, the HMD of the present disclosure reduces or prevents surprises to the user from real world objects.

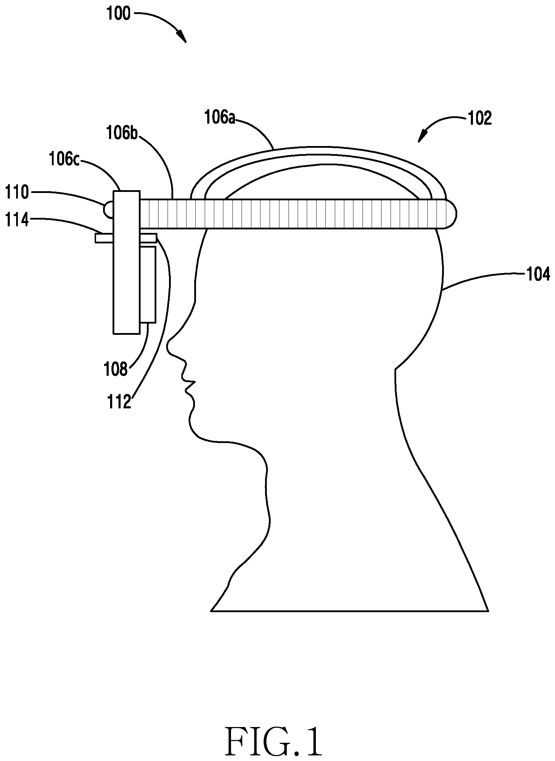

FIGURES 1 through 6, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system and method for alerting a HMD user to real-world objects.

FIGURE 1 illustrates a head mounted display 100 according to the disclosure. The HMD 100 includes a headpiece 102 that enables a user 104 to wear the HMD 100. The HMD 100 may be removed from the head of the user 104 when not in use. The headpiece 102 includes a band 106b that wraps around the sides and back of the head of the user 104 to maintain display elements of the HMD 100 in front of the face of the user 104. The headpiece 102 also includes a strap 106a that extends from the front to the back of the HMD 100 to support the HMD 100 in a vertical position to maintain at least one display of the HMD 100 in front of the eyes of the user 104.

In other embodiments, the headpiece 102 may be a helmet or other structure suitable for removably coupling the HMD 100 to the head of the user 104 and position display elements of the HMD 100 in front of at least a portion of the face of the user 104.

The headpiece 102 may also include an element 106c for mounting (or mechanically coupling) other elements of the HMD 100 to the headpiece 102. An internal display 108 is mounted to the headpiece 102 in a position the user 104 is able to view the display 108. An internal sensor 112 may be mounted to the headpiece 102 in a position that permits the sensor 112 to acquire information about the user 104.

The internal sensor 112 may include a visual or proximity sensor that acquires information relating to whether the HMD 100 is currently being worn by a user. The internal sensor 112 may include an accelerometer, GPS receiver, or other motion-sensitive device to acquire information relating to movements of the user.

An external sensor 114 is mounted to the headpiece 102 in a position that permits the external sensor 114 to acquire information about the user's surroundings. While the external sensor 114 is shown mounted to a front side of the HMD 100 in FIGURE 1, it will be understood that in other embodiments the sensor 114 may be mounted in any suitable position on the headpiece 102. In still other embodiments, a sensor system comprising a plurality of external sensors 114 may be mounted in a corresponding plurality of locations around the headpiece 102.

An external indicator 110 may be mounted to the headpiece 102. The external indicator 110 may be an LED or other light-emitting device that provides a visual indication to a person observing the user 104 of the HMD 100. In other embodiments, the external indicator 110 may be an indicator system comprising a plurality of external indicators 110 mounted in a corresponding plurality of locations around the headpiece 102.

The internal sensor 112 and/or the external sensor 114 may comprise one or more of any suitable image-forming sensor technologies. Examples of such suitable technologies include, but are not limited to: infrared (IR) cameras, red-green-blue (RGB) or other visible-light cameras, IR or visible-light depth or stereo cameras.

In some embodiments, the internal display 108 is a smart phone or other standalone device. In such embodiments, one or more of the internal sensor 112, the external sensor 114, and the external indicator 110 may be provided by the smart phone. The internal sensor 112 may be a user-facing camera of the smart phone, the external sensor 114 may be an outward-facing camera of the smart phone, and the external indicator 110 may be a flash or other illuminator of the smart phone.

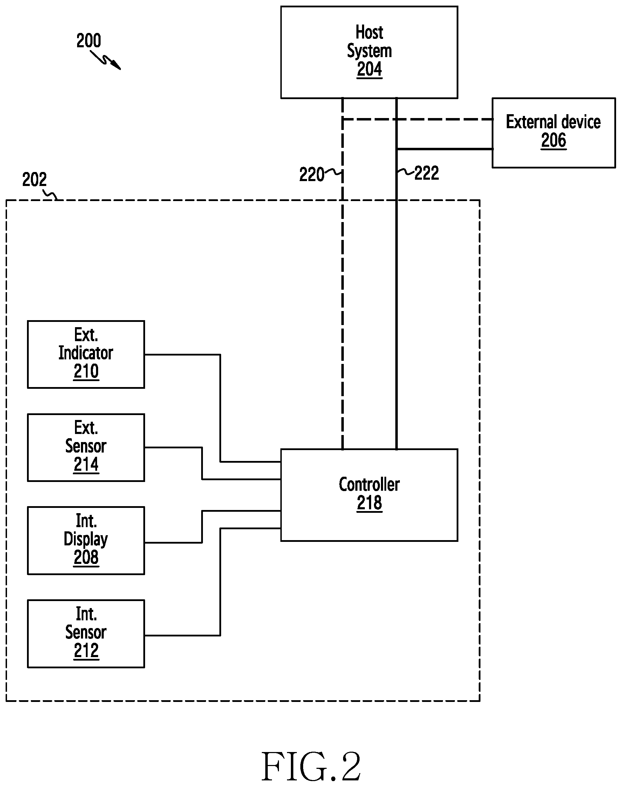

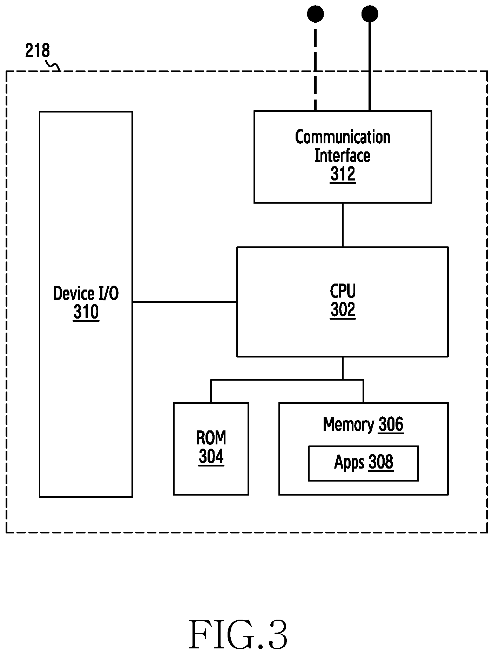

FIGURE 2 illustrates a system 200 for use of a HMD 202 according to the disclosure. The HMD 202 includes a controller 218, which will be described in more detail with reference to FIGURE 3. The controller 218 is communicatively coupled to HMD elements internal display 208, optional internal sensor 212, external sensor 214, and external indicator 210. While the HMD elements are shown coupled to the controller 218 by separate links in FIGURE 2, it will be understood that in other embodiments, some or all of the HMD elements may be coupled to the controller 218 by a bus system or other suitable communication link. Where the internal display 208 is a smart phone or other standalone wireless device, controller 218 may communicate with such a device via a wired interface, such as an Ethernet or USB, or via a wireless interface, such as IR, Bluetooth, WiFi, or other suitable technology.

In some embodiments, the controller 218 has sufficient processing power to execute a visualization program for generating a VR display for a user of the HMD 202 and provide all functionality of a system according to the disclosure, as described herein. In other embodiments, the controller 218 does not have sufficient processing power to provide all such functionality. In such other embodiments, the controller 218 is communicatively coupled to at least one of a host system 204 and an external device 206 via one or both of a wireless communication link 220 and/or a wired communication link 222. The host system 204 executes the visualization program and the functionality of the system according to the disclosure. The system functionality may be provided by the visualization program, or may be provided by a driver or other standalone application.

In still other embodiments, the controller 218 may provide some functions of a system according to the disclosure, while the host system 204 provides other functions. For example, the host system 204 may execute the visualization program, while the controller 218 provides other functions of the system. In still other embodiments, some functions of the system may be provided by a third processing platform (not shown) that is communicatively coupled to one or both of the controller 218 and the host system 204. For example, the host system 204 may execute the visualization program, while the third platform provides other functions of the system.

FIGURE 3 illustrates a controller 218 for a head mounted display according to the disclosure. The controller 218 includes read-only memory (ROM) 304, random access memory (RAM) 306, central processing unit (CPU) 302, device input/output (I/O) device 310, and communication interface 312. In one embodiment, ROM 304 may store a boot-routine and other static data and RAM 306 may store an operating system (not shown) and applications 308. In an advantageous embodiment, ROM 304 and RAM 306 may comprise an electronically erasable memory, such as a Flash memory, that is used in conjunction with a conventional RAM memory that is used to store dynamic data. A person of skill in the art will recognize that the controller 218 may include numerous other elements in addition to those shown in FIGURE 3.

CPU 302 is responsible for the overall operation of the controller 218. In an exemplary embodiment, CPU 302 executes applications 308. According to the principles of the disclosure, applications 308 provide some or all functionality of a system according to the disclosure, as described herein, and may include a visualization program.

CPU 302 communicates with HMD elements internal display 208, external indicator 210, optional internal sensor 212, and external sensor 214 via device I/O device 310. The CPU 302 communicates with one or both of host system 204 and external device 206 via communication interface 312.

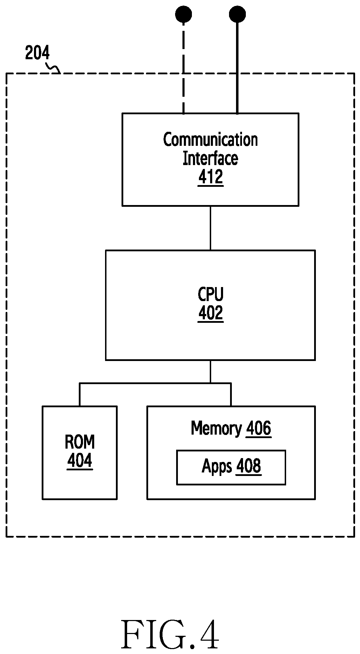

FIGURE 4 illustrates a host system 204 for a head mounted display according to the disclosure. The host system 204 includes read-only memory (ROM) 404, random access memory (RAM) 406, central processing unit (CPU) 402, and communication interface 412. In one embodiment, ROM 404 may store a boot-routine and other static data and RAM 406 may store an operating system (not shown) and applications 408. A person of skill in the art will recognize that the host system 204 may include numerous other elements in addition to those shown in FIGURE 4.

CPU 402 may responsible for the overall operation of the host system 204. In an exemplary embodiment, CPU 402 executes applications 408. According to the principles of the disclosure, applications 408 provide some or all functionality of a system according to the disclosure, as described herein, and may include a visualization program. CPU 402 communicates with one or both of HMD 202 and external device 206 via communication interface 412.

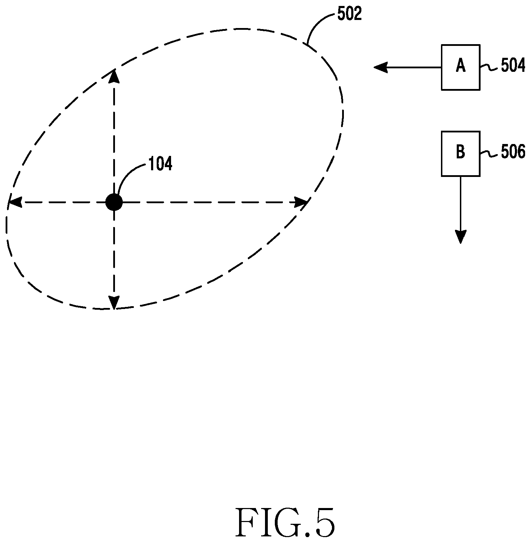

FIGURE 5 illustrates a trigger zone and an object in the vicinity of a head mounted display user according to the disclosure. The HMD 100 determines a trigger zone 502 that extends out from the location of the user 104. The trigger zone 502 may extend the same distance from the user 104 in all directions (above, below, left, right, front, and back) or the zone may have a different extent in one or more of those directions. The HMD 100 processes information from the external sensor 114 to detect one or more moving objects 504 and 506 in the vicinity of the user 104. The HMD 100 calculates velocity (speed and direction) of the moving objects 504 and 506, and determines whether the moving objects 504 and 506 will enter the trigger zone 502 around the user 104. If the moving object 504 will enter the trigger zone 502, the HMD 100 notifies the user of this impending event. On the other hand, if the moving object 506 will not enter the trigger zone 502, the HMD 100 does not react to the moving object 506. That is, the HMD 100 detects a velocity characteristic of the moving objects, determines whether the characteristic matches the predefined criterion of entering the trigger zone, and, if a match is determined, displays an alert to the user.

In other embodiments, the HMD 100 may use the internal sensor 112 to calculate a velocity of the user 104 and determine whether objects 504 and 506 in the vicinity of the user 104 (static objects, moving objects, or both) will enter the trigger zone 502. If the HMD 100 determines that the user's motion will cause an object to enter the trigger zone (for example, the user is about to walk into a table), the HMD displays an alert to the user. In still other embodiments, the HMD 100 may subtract a calculated velocity of the user from a detected velocity of an object to determine that the object will not enter the trigger zone.

In still other embodiments, the HMD 100 may receive information from a host system 204 that is generating the user's VR display. The information may provide an expected path that the user is about to take based upon his/her activity with the VR application being used. This expected path information may then be compared to the positions and/or velocities of objects in the vicinity of the user to predict whether the user will move and cause one or more of the objects to enter the trigger zone. In some such embodiments, the HMD 100 may send information to the host system 204 about the objects in the vicinity of the user, enabling the VR application to alter some element of the user's VR display, thereby changing the user's expected path and reducing the risk of the user colliding with the object(s).

In some embodiments, the HMD 100 may determine that an object 504 or 506 detected in the user's vicinity is another person. As described above, the HMD 100 may calculate a velocity for the person, determine whether the person will enter the user's trigger zone 502, and, if so, display an alert to the user.

In other embodiments, the HMD 100 may detect some other characteristic of the person. The HMD 100 may use facial recognition or other identity recognition processing to determine an identity of the person. If the person's identity matches an identity selected by the user (for example, the user's supervisor, spouse, child, etc.), the HMD 100 displays an alert to the user 104. The HMD 100 may use gesture recognition processing to determine that the person is performing a predefined gesture (for example, waving, raising a stick, pointing a gun, etc.) and, in response, display an alert to the user. The HMD 100 may use gaze-tracking processing to determine that the person is looking at the user 104 and, in response, display an alert to the user 104. In some such embodiments, the HMD 100 may additionally capture one or more of video, audio, and still images of the person making the gesture or looking at the user 104, using the external sensor 114 and/or other sensors of the HMD 100.

In embodiments according to the invention, the HMD 100 provides a plurality of operational modes for providing functionality according to the disclosure. In each mode, the user 104 can selectively enable the characteristics of objects 504 or 506 that the HMD 100 detects and/or the predefined criteria that the characteristics are matched against. For example, in a "home" mode, the HMD 100 may be set to recognize a spouse, a child, or other family member. In "home" mode, the extent of a trigger zone 502 may be smaller, or displaying an alert in response to a person looking at the user may be disabled. In contrast, in a "public" mode, the extent of the trigger zone 502 may be made larger and gesture recognition may trigger an alert for a larger number of gestures. In an "office" mode, a third combination of characteristics and predefined criteria may be enabled.

In some embodiments, the HMD 100 may be placed into such an operational mode by the user. In embodiments according to the invention, the HMD 100 may automatically select an operational mode based on, for example, visually recognizing a home or work environment, or identifying a WiFi (wireless fidelity) access point with which the HMD 100 is in communication as the user's home or office WiFi system or a public access point.

In any embodiment, the alert may be in one or more forms. In some embodiments, the alert is a passthrough window, showing the user a view captured by the external sensor 114 or other visible imagery sensor. In some embodiments, the passthrough window may replace the user's current VR display, pausing the user's activity in the application generating the VR display. The HMD 100 may cause such pausing of activity by sending a message to a host system generating the VR display.

In other embodiments, the passthrough window may be displayed side-by-side with the user's VR display, or as a picture-in-picture inset within the user's VR display. In such embodiments the user may continue with activity in the VR application.

Where the alert is a passthrough window, the HMD 100 may also activate the external indicator 110 when the passthrough window is displayed to the user 104. In this way, a person in the vicinity of the user may be informed that the user is viewing his/her surroundings in the passthrough window.

In still other embodiments, the alert may be a graphic symbol displayed within the user's current VR display. Examples of such a graphic symbol include, but are not limited to, a red circle or the 'walking man' symbol from a street crossing signal.

In yet other embodiments, a position of the alert may communicate to the user a direction of the detected object. A colored border may be displayed on the left side of the user's VR display to indicate an object to the user's left, or a border at the top of the display to indicate an object behind the user.

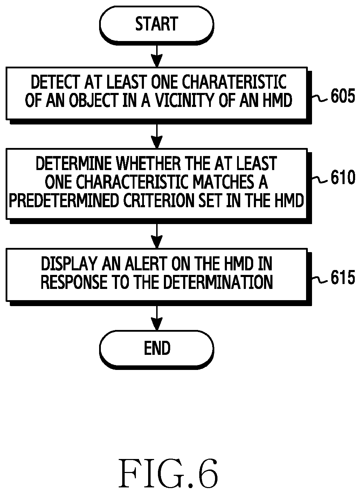

FIGURE 6 illustrates a flow chart for displaying an alert for a real-world object to a head mounted display user according to the disclosure.

In step 605, the HMD 100 can detect at least one characteristic of an object in the vicinity of the HMD by using the external sensor 114. Here, the object can be replaced with a person, and the at least one characteristic comprises a velocity of the object or the person, and a motion of the person.

In step 610, the HMD 100 can determine whether the at least one characteristic matches a predetermined criterion set in the HMD 100. The HMD 100 can expect a possibility that a user of the HMD 100 collides with the object or another person based on the determination of the step 610. For example, the HMD 100 can determine whether the object enters a predetermined range of a trigger zone centered on a position of the user. For another example, the HMD 100 can determine whether a person performs a predetermined motion by a motion recognition processing.

In step 615, if the at least one characteristic matches the predetermined criterion set in the HMD 100, the HMD 100 can display an alert on its display. For example, if the HMD determines that the object enters the predetermined range of the trigger zone, the HMD 100 can display an alert (for example, a window or a graphic symbol) to internal display 208 couple to the HMD 100 so as for the user of the HMD 100 to recognize the object entering the trigger zone.

The overall operation of the HMD 100 including detecting at least one characteristic of an object in the vicinity of the HMD, determining whether the at least one characteristic matches a predetermined criterion set in the HMD, and displaying an alert on the HMD in response to the determination can be performed automatically by the HMD 100 without any input from the user of the HMD 100.

Although the present disclosure has been described with an exemplary embodiment, various changes and modifications may be suggested to one skilled in the art. It is intended that the present disclosure encompass such changes and modifications as fall within the scope of the appended claims.

## Claims

1. A method for operating a head mounted display (102), HMD, the method comprising:
detecting (605) at least one characteristic of an object (504, 506) in a vicinity of the HMD (102);
determining (610) whether the at least one characteristic matches a predetermined criterion set in the HMD (102); and
displaying (615) an alert on the HMD (102) in response to the determination;
wherein the determining (610) of whether the at least one characteristic matches a predetermined criterion comprises:
calculating whether the object (504, 506) will enter a zone having a predefined range centered on a position of a user (104) of the HMD (102);
wherein at least one of the predefined range, the at least one characteristic and the predetermined criterion is set based on an operational mode selected among a plurality of operational modes, and
wherein the operational mode is selected based on:
identifying, by the HMD (102), a WiFi access point with which the HMD (102) is communicating, or
visually recognizing, by the HMD (102), a home environment or a work environment.

2. The method of Claim 1, wherein the plurality of operational modes include a home mode an office mode and a public mode.

3. The method of Claim 1, wherein the predefined range of the zone extends to a different distance in each direction of a plurality of directions from the position of the user (104).

4. The method of Claim 1, wherein the detecting (605) of at least one characteristic of an object (504, 506) in the vicinity of the HMD (102) comprises detecting a velocity of at least one of the object (504, 506) and the HMD (102).

5. The method of Claim 1, wherein the detecting (605) of the at least one characteristics of the object (504, 506) comprises:
detecting at least one characteristic of a person, wherein the object (504, 506) is detected as the person.

6. The method of Claim 1, wherein the displaying (615) of the alert on the HMD (102) in response to the determination comprises activating an external indicator (110) coupled to the HMD (102).

7. A head mounted display (102), HMD, comprising:
an internal display (108);
an external sensor (113); and
a controller (218) configured to:
detect (605) at least one characteristic of an object (504, 506) in a vicinity of the HMD (102);
determine (610) whether the at least one characteristic matches a predetermined criterion set in the HMD (102); and
display (615) an alert on the HMD (102) in response to the determination;
wherein the controller (218) is further configured to: calculate whether the object (504, 506) will enter a zone having a predefined range centered on a position of a user (104) of the HMD (102);
wherein at least one of the predefined range, the at least one characteristic and the predetermined
criterion is set based on an operational mode selected among a plurality of operational modes, and
wherein the operational mode is selected based on:
identifying, by the HMD (102), a WiFi access point with which the HMD (102) is communicating, or
visually recognizing, by the HMD (102), a home environment or a work environment.

8. The HMD (102) of Claim 7, wherein the plurality of operational modes include a home mode, an office mode and a public mode.

9. The HMD (102) of Claim 7, wherein the predefined range of the zone extends to a different distance in each direction of a plurality of directions from the position of the user (104).

10. The HMD (102) of Claim 7, wherein the controller (218) is further configured to detect a velocity of at least one of the object (504, 506) and the HMD (102).

11. The HMD (102) of Claim 7, wherein the controller (218) is further configured to detect at least one characteristic of a person, wherein the object (504, 506) is detected as the person.

12. The HMD (102) of Claim 7, wherein the controller (218) is further configured to activate an external indicator (110) coupled to the HMD (102).

## Patentansprüche

1. Verfahren zum Betreiben eines Head-Mounted Display (102), HMD, wobei das Verfahren Folgendes umfasst:
Erfassen (605) mindestens eines Merkmals eines Objekts (504, 506) in der Nähe des HMD (102);
Bestimmen (610), ob das mindestens eine Merkmal einem vorbestimmten Kriterium entspricht, das in dem HMD (102) festgelegt ist; und
Anzeigen (615) eines Alarms auf dem HMD (102) als Reaktion auf die Bestimmung;
wobei das Bestimmen (610), ob das mindestens eine Merkmal einem vorbestimmten Kriterium entspricht, Folgendes umfasst:
Berechnen, ob das Objekt (504, 506) in eine Zone mit einem vordefinierten Bereich eintritt, der auf einer Position eines Benutzers (104) des HMD (102) zentriert ist;
wobei mindestens eines des vordefinierten Bereichs, des mindestens einen Merkmals und des vorbestimmten Kriteriums basierend auf einem Betriebsmodus eingestellt wird, der aus einer Vielzahl von Betriebsmodi ausgewählt ist, und wobei der Betriebsmodus basierend auf Folgendem ausgewählt wird:
Identifizieren eines WiFi-Zugangspunkts, mit dem das HMD (102) kommuniziert, durch das HMD (102), oder
visuelles Erkennen einer häuslichen Umgebung oder einer Arbeitsumgebung durch das HMD (102).

2. Verfahren nach Anspruch 1, wobei die Vielzahl von Betriebsmodi einen Heimmodus, einen Büromodus und einen öffentlichen Modus einschließt.

3. Verfahren nach Anspruch 1, wobei sich der vordefinierte Bereich der Zone in jeder Richtung einer Vielzahl von Richtungen von der Position des Benutzers (104) in einem unterschiedlichen Abstand erstreckt.

4. Verfahren nach Anspruch 1, wobei das Erfassen (605) von mindestens einem Merkmal eines Objekts (504, 506) in der Nähe des HMD (102) das Erfassen einer Geschwindigkeit von mindestens einem des Objekts (504, 506) und des HMD (102) umfasst.

5. Verfahren nach Anspruch 1, wobei das Erfassen (605) des mindestens einen Merkmals des Objekts (504, 506) Folgendes umfasst:
Erfassen mindestens eines Merkmals einer Person, wobei das Objekt (504, 506) als die Person erfasst wird.

6. Verfahren nach Anspruch 1, wobei das Anzeigen (615) des Alarms auf dem HMD (102) als Reaktion auf die Bestimmung das Aktivieren eines externen Indikators (110) umfasst, der an das HMD (102) gekoppelt ist.

7. Head-Mounted Display (102), HMD, umfassend:
eine interne Anzeige (108);
einen externen Sensor (113); und
eine Steuerung (218), die zu Folgendem konfiguriert ist:
Erfassen (605) mindestens eines Merkmals eines Objekts (504, 506) in der Nähe des HMD (102);
Bestimmen (610), ob das mindestens eine Merkmal einem vorbestimmten Kriterium entspricht, das in dem HMD (102) festgelegt ist; und
Anzeigen (615) eines Alarms auf dem HMD (102) als Reaktion auf die Bestimmung; wobei die Steuerung (218) ferner konfiguriert ist, um: zu berechnen, ob das Objekt (504, 506) in eine Zone mit einem vordefinierten Bereich eintritt, der auf einer Position eines Benutzers (104) des HMD (102) zentriert ist;
wobei mindestens eines des vordefinierten Bereichs, des mindestens einen Merkmals und des vorbestimmten Kriteriums basierend auf einem Betriebsmodus eingestellt wird, der aus einer Vielzahl von Betriebsmodi ausgewählt ist, und wobei der Betriebsmodus basierend auf Folgendem ausgewählt wird:
Identifizieren eines WiFi-Zugangspunkts, mit dem das HMD (102) kommuniziert, durch das HMD (102), oder
visuelles Erkennen einer häuslichen Umgebung oder einer Arbeitsumgebung durch das HMD (102).

8. HMD (102) nach Anspruch 7, wobei die Vielzahl von Betriebsmodi einen Heimmodus, einen Büromodus und einen öffentlichen Modus einschließt.

9. HMD (102) nach Anspruch 7, wobei sich der vordefinierte Bereich der Zone in jeder Richtung einer Vielzahl von Richtungen von der Position des Benutzers (104) in einem unterschiedlichen Abstand erstreckt.

10. HMD (102) nach Anspruch 7, wobei die Steuerung (218) ferner konfiguriert ist, um eine Geschwindigkeit von mindestens einem des Objekts (504, 506) und des HMD (102) zu erfassen.

11. HMD (102) nach Anspruch 7, wobei die Steuerung (218) ferner konfiguriert ist, um mindestens ein Merkmal einer Person zu erfassen, wobei das Objekt (504, 506) als die Person erfasst wird.

12. HMD (102) nach Anspruch 7, wobei die Steuerung (218) ferner konfiguriert ist, um einen externen Indikator (110) zu aktivieren, der an das HMD (102) gekoppelt ist.

## Revendications

1. Procédé d'exploitation d'un casque de réalité virtuelle (102), HMD, le procédé comprenant :
la détection (605) d'au moins une caractéristique d'un objet (504, 506) au voisinage du HMD (102);
la détermination (610) si l'au moins une caractéristique correspond à un critère prédéterminé défini dans le HMD (102) ; et
l'affichage (615) d'une alerte sur le HMD (102) en réponse à la détermination ;
dans lequel la détermination (610) si l'au moins une caractéristique correspond à un critère prédéterminé comprend :
le calcul si l'objet (504, 506) va entrer dans une zone ayant une plage prédéfinie centrée sur une position d'un utilisateur (104) du HMD (102) ;
dans lequel au moins l'un de la plage prédéfinie, de l'au moins une caractéristique et du critère prédéterminé est défini sur la base d'un mode opérationnel sélectionné parmi une pluralité de modes opérationnels, et
dans lequel le mode opérationnel est sélectionné sur la base de :
l'identification, par le HMD (102), d'un point d'accès WiFi avec lequel le HMD (102) communique, ou
la reconnaissance visuelle, par le HMD (102), d'un environnement domestique ou d'un environnement de travail.

2. Procédé selon la revendication 1, dans lequel la pluralité de modes opérationnels comprend un mode domestique, un mode bureau et un mode public.

3. Procédé selon la revendication 1, dans lequel la plage prédéfinie de la zone s'étend sur une distance différente dans chaque direction d'une pluralité de directions à partir de la position de l'utilisateur (104).

4. Procédé selon la revendication 1, dans lequel la détection (605) d'au moins une caractéristique d'un objet (504, 506) au voisinage du HMD (102) comprend la détection d'une vitesse d'au moins l'un de l'objet (504, 506) et du HMD (102).

5. Procédé selon la revendication 1, dans lequel la détection (605) de l'au moins une caractéristique de l'objet (504, 506) comprend :
la détection d'au moins une caractéristique d'une personne, dans lequel l'objet (504, 506) est détecté comme la personne.

6. Procédé selon la revendication 1, dans lequel l'affichage (615) de l'alerte sur le HMD (102) en réponse à la détermination comprend l'activation d'un indicateur externe (110) couplé au HMD (102).

7. Casque de réalité virtuelle (102), HMD, comprenant :
un affichage interne (108) ;
un capteur externe (113) ; et
un contrôleur (218) configuré pour :
détecter (605) au moins une caractéristique d'un objet (504, 506) au voisinage du HMD (102) ;
déterminer (610) si l'au moins une caractéristique correspond à un critère prédéterminé défini dans le HMD (102) ; et
afficher (615) une alerte sur le HMD (102) en réponse à la détermination ;
dans lequel le contrôleur (218) est en outre configuré pour : calculer si l'objet (504, 506) va entrer dans une zone ayant une plage prédéfinie centrée sur une position d'un utilisateur (104) du HMD (102) ;
dans lequel au moins l'un de la plage prédéfinie, de l'au moins une caractéristique et du critère prédéterminé est défini sur la base d'un mode opérationnel sélectionné parmi une pluralité de modes opérationnels, et
dans lequel le mode opérationnel est sélectionné sur la base de :
l'identification, par le HMD (102), d'un point d'accès WiFi avec lequel le HMD (102) communique, ou
la reconnaissance visuelle, par le HMD (102), d'un environnement domestique ou d'un environnement de travail.

8. HMD (102) selon la revendication 7, dans lequel la pluralité de modes opérationnels comprend un mode domestique, un mode bureau et un mode public.

9. HMD (102) selon la revendication 7, dans lequel la plage prédéfinie de la zone s'étend sur une distance différente dans chaque direction d'une pluralité de directions à partir de la position de l'utilisateur (104).

10. HMD (102) selon la revendication 7, dans lequel le contrôleur (218) est en outre configuré pour détecter une vitesse d'au moins l'un de l'objet (504, 506) et du HMD (102).

11. HMD (102) selon la revendication 7, dans lequel le contrôleur (218) est en outre configuré pour détecter au moins une caractéristique d'une personne, dans lequel l'objet (504, 506) est détecté comme la personne.

12. HMD (102) selon la revendication 7, dans lequel le contrôleur (218) est en outre configuré pour activer un indicateur externe (110) couplé au HMD (102).
